## Europäisches Patentamt
## European Patent Office
## Office européen des brevets

(11) Veröffentlichungsnummer: **0 130 239**
**A1**

(12) # EUROPÄISCHE PATENTANMELDUNG

(21) Anmeldenummer: **83113127.1**

(51) Int. Cl.⁴: **B 65 D 35/10, B 29 D 23/20**

(22) Anmeldetag: **27.12.83**

(30) Priorität: **28.06.83 US 508676**

(43) Veröffentlichungstag der Anmeldung: **09.01.85** Patentblatt **85/2**

(84) Benannte Vertragsstaaten: **CH DE FR GB IT LI**

(71) Anmelder: **AISA Automation Industrielle SA, Route de Savole, CH-1896 Vouvry (CH)**

(72) Erfinder: **Grimsley, Arvid K., 61 Gutzon Borglum Road, Stamford Connecticut 06903 (US)**

(74) Vertreter: **Patentanwälte Zellentin, Zweibrückenstrasse 15, D-8000 München 2 (DE)**

(54) Zusammendrückbarer Behältervorformling und Verfahren zu dessen Herstellung.

(57) Die Erfindung bezieht sich auf einen Vorformling für einen zusammendrückbaren Laminattubenbehälter sowie ein Verfahren zur Herstellung eines derartigen Vorformlings. Der Behältervorformling (40) weist einen Einsatz (31) auf, der an einem zylindrischen Hals (14) des Vorformlings (40) unter Reibung festgelegt ist, und der, wenn der Vorformling zu einem Behälter geformt wird, eine Sperre gegenüber dem Durchgang von Wasserdampf und Sauerstoff durch den zylindrischen Hals (14) und die Schulter (13) des Behälters darstellt.

## Zusammendrückbarer Behältervorformling und Verfahren zu dessen Herstellung

Die Erfindung bezieht sich auf einen Vorformling für einen zusammendrückbaren Laminattubenbehälter sowie ein Verfahren zur Herstellung eines derartigen Vorformlings.

Zusammendrückbare Laminattubenbehälter sind z.B. aus der US-PS 3 172 571 bekannt, wobei ein thermoplastisches Kopfstück durch Spritzgießen auf eine Laminattube aufgesetzt wird. Das geformte Kopfstück weist einen Halsteil und einen Saum-oder Schulterteil auf, der während des Spritzgußvorganges mit dem oberen Teil der Laminattube verbunden wird.

Dieser bekannte Behälter kann so aufgebaut sein, daß er gegenüber Feuchtigkeit, Sauerstoff und flüchtige Öle undurchlässig ist. Der Verwendungszweck einer solchen undurchlässigen Tube besteht darin, einerseits den Durchgang von flüchtigen Ölen und Feuchtigkeit, die dem im Inneren des Behälters befindlichen Erzeugnis anhaften, über die Tube zur Außenseite des Behälters zu verhindern und anderer-

- 2 -

seits den Durchgang von Sauerstoff von der Außenseite über die Tube in das Innere des Behälters auszuschließen.

Ein Problem bei diesem Behälter besteht darin, daß der thermoplastische Schulterteil des Behälters, im Gegensatz zur Tube selbst, nicht geschichtet und relativ durchlässig gegenüber Feuchtigkeit und Sauerstoff ist. Zumindest zu Beginn der sechziger Jahre wurde eine Anzahl von Techniken ausgedacht, um die Durchlässigkeit der thermoplastischen Schultern, die an der Laminattube durch Spritzgießen befestigt wurden, zu verringern.

Z. B. weisen die US-PSen 3 260 777 und 3 295 725 ein "geschichtetes Scheibenglied 29" auf, das einen Schutz gegen das Eindringen des Erzeugnisses in den Schulterteil des Behälters sowie gegen die Sauerstoffadsorption in den Schulterteil des Behälters vorsehen soll. Dieses geschichtete Scheibenglied wird durch mehrere Arbeitsschritte in das thermoplastische Kopfstück des Behälters eingebettet. Zuerst werden das geschichtete Scheibenglied und die Laminattube auf einem Dorn 70 angeordnet, wie dies in der jeweiligen Fig. 5 der vorgenannten Patentschriften dargestellt ist. Anschließend wird thermoplastisches Material zur Ausbildung des Behälterkopfstückes in den Kanal 71b eingeführt, wie dies in Fig. 6 jeder der genannten Patentschriften dargestellt ist. Der Druck des in den Kanal 71b eingeführten thermoplastischen Materials hebt das Scheibenglied vom Dorn ab und zentriert es zuverlässig in dem Schulterteil des sich ergebenden Kopfstücks. Beide vorgenannten Patentschriften heben hervor, daß das Scheibenglied von der Laminattube des Behälters räumlich abgesetzt ist, um eine Verbindung zwischen dem thermoplastischen Kopfstück des Behälters und der Laminattube zu ermöglichen.

Ferner wurden vielfältige Techniken zur Verringerung der

Durchlässigkeit des Schulterteils der zusammendrückbaren Behälter vorgeschlagen, wie z.B. diejenigen, die in der erstgenannten US-PS 3 172 571 beschrieben sind. Eine Anzahl derartiger Techniken wird ferner in den US-PSen 3 565 293, 4 185 757, 4 338 278 und 3 260 411 erläutert. Bei jeder dieser Techniken wird ebenso wie bei den genannten US-PSen 3 260 777 und 3 295 725 ein undurchlässiges Glied in das Behälterkopfstück eingebettet, mit diesem verankert oder mit diesem verbunden. Beispielsweise weist der ,in den Fig. 3 und 5 der US-PS 4 185 757 gezeigte Sperreinsatz ausgebuchtete Abschnitte 44 auf, die während der Ausbildung des Behälterkopfstücks den Fluß des thermoplastischen Materials aufnehmen, um den Einsatz am Kopfstück zu verankern.

Seit Beginn der sechziger Jahre bis jetzt wurden praktisch alle zusammendrückbaren, geschichteten Zahnpastatuben, die in den USA verkauft wurden, mit Hilfe der oben erwähnten Techniken hergestellt, wobei ein thermoplastisches Kopfstück spritzgegossen und gleichzeitig mit dem Tubenteil des Behälters verbunden wurde. Vor kurzem wurden jedoch Tuben verkauft, die jeweils aus einem geformten Kopfstück, einer Laminattube und einem geschichteten Schultereinsatz bestehen. Dabei werden alle Teile vorgeformt und in einem separaten Verbindungsschritt miteinander verbunden. Bei diesen Behältern besteht der Zweck des geschichteten Schultereinsatzes darin, die Durchlässigkeit zu verringern, die sonst der Schulterteil des Behälters aufweisen würde.

Behälter dieser Art sind in der DE-PS 30 42 073 beschrieben. In den Fig. 1 und 2 dieser Patentschrift ist das geformte Kopfstück mit dem Bezugszeichen 2, der geschichtete Schultereinsatz mit dem Bezugszeichen 3 und die Laminattube mit dem Bezugszeichen 1 gekennzeichnet. Während der Herstellung

0130239

des Behälters dieser Patentschrift werden sowohl der Einsatz als auch die Tube mit dem geformten Kopfstück verbunden.

In der US-PS 4 132 331 werden ebenso zusammendrückbare Behälter beschrieben, wobei ein geformtes Kopfstück, eine Laminattube und ein zur Verringerung der Durchlässigkeit des Schulterteils des Behälters dienender geschichteter Schultereinsatz vorgeformt und in einem separaten Verbindungsschritt oder in separaten Verbindungsschritten miteinander verbunden werden. Ebenso wie bei dem Behälter gemäß DE-PS 30 42 073 steht jeder der geschichteten Schultereinsätze der Behälter gemäß US-PS 4 132 331 mit dem Rest des Behälters in Verbindung.

Somit bestand seit Anfang der sechziger Jahre das Ziel, zusammendrückbare Behälter mit Schulterteilen zu entwerfen, die relativ undurchlässig gegenüber Sauerstoff und Wasserdampf sind. Um dieses Ziel zu erreichen, wurde eine Vielzahl von Behältern entworfen. Diese Entwürfe sind jedoch durch ein gemeinsames Erfordernis gekennzeichnet, nämlich daß der Behälter einen relativ undurchlässigen Einsatz oder einen Teil einschließt, der in dem Rest des Behälters eingebettet, mit diesem verankert oder verbunden wird.

Die Erfindung ist auf einen zusammendrückbaren Behältervorformling, der in seinem Hals und seinen Schulterteilen einen Einsatz aufweist, der gegenüber Wasserdampf und Sauerstoff relativ undurchlässig ist, sowie ein Verfahren zur Herstellung eines derartigen zusammendrückbaren Behältervorformlings gerichtet. Im Gegensatz zu den bekannten, oben erwähnten Behälteraufbauten ist der Einsatz des erfindungsgemäßen Behältervorformlings nicht in den Rest des Aufbaus des Behältervorformlings eingebettet, mit diesem verankert oder verbunden. Vielmehr ist der Einsatz

unter Reibung an dem zylindrischen Hals des Behältervorformlings befestigt. Mit dem Ausdruck "unter Reibung befestigt"
soll verstanden werden, daß der Einsatz allein durch die Reibungskraft am zylindrischen Hals des Behälters befestigt ist.
Als Ergebnis dessen kann der Einsatz von dem Rest des Behältervorformlings entfernt werden, ohne daß dabei irgendeine
Verbindung zwischen dem Einsatz und dem Rest des Behältervorformlings aufgebrochen oder die Ganzheit des Restes des
Behältervorformlings zerstört werden muß.

Der erfindungsgemäße Behältervorformling weist nicht nur
Hals- und Schulterteile auf, die relativ undurchlässig
gegenüber Wasserdampf und Sauerstoff sind, sondern er hat
auch zusätzliche Vorteile. Insbesondere ist er im Vergleich
zu den bekannten, oben beschriebenen Aufbauten relativ einfach herstellbar. Z.B. ist - im Gegensatz zu den bekannten
Aufbauten - kein Erwärmungsschritt erforderlich, um den
Einsatz mit dem Rest des Behälters zu verbinden. Außerdem
ist das Verfahren zur Herstellung des Behältervorformlings
nicht nur weitaus wirtschaftlicher, da ein zur Verbindung
dienender Erhitzungsvorgang nicht erforderlich, sondern
es werden Qualitätskontrollprobleme vermieden, die andererseits durch mangelndes Zusammenbleiben der verbundenen Elemente hervorgerufen würden. Im Gegensatz zu einem bekannten,
vorstehend erläuterten Aufbau ist zur Herstellung des erfindungsgemäßen Behältervorformlings keine komplizierte
Form zur Herstellung von Einsätzen erforderlich, die in
das Behälterkopfstück eingebettet oder mit diesem verankert werden.

Der erfindungsgemäße Behältervorformling mit den oben genannten und weiteren Vorteilen weist folgende Teile auf:

(a) einen zylindrischen Hals mit einer Außenfläche und
    einer Innenfläche,

(b) eine flexible Laminattube mit einer Innenfläche und einer Außenfläche sowie einem offenen Boden,

(c) eine Außenschulter, die den zylindrischen Hals mit der Laminattube verbindet und eine Innenfläche sowie eine Außenfläche aufweist, wobei ein Teil der Außenfläche der Schulter mit einem oberen Teil der Innenfläche der Laminattube in Verbindung steht und

(d) einen Einsatz, der unter Reibung an dem zylindrischen Hals befestigt ist und folgende Teile aufweist:

(i) einen Einsatzhals mit einer Innenfläche und einer Außenfläche, wobei wenigstens ein Teil der Außenfläche des Einsatzhalses an wenigstens einem Teil der Innenfläche des zylindrischen Halses anliegt und unter Reibung befestigt ist und

(ii) eine Einsatzschulter mit einer Innenfläche und einer Außenfläche, wobei wenigstens ein Teil der Außenfläche der Einsatzschulter an wenigstens einem Teil der Innenfläche der Außenschulter anliegt.

Vorzugsweise weisen der zylindrische Hals und die Außenschulter des Behältervorformlings einen einstückig geformten Aufbau auf. Der Einsatz weist vorzugsweise ebenso einen geformten bzw. gepreßten Aufbau auf. Der Einsatz besteht vorzugsweise aus einem Material, das relativ undurchlässig gegenüber Wasserdampf und Sauerstoff ist. Vorzugsweise ist dieses Material weniger durchlässig gegenüber Wasserdampf und Sauerstoff als dasjenige Material, aus dem der zylindrische Hals und die Außenschulter, die einstückig ausgebildet sind, aufgebaut sind. Z.B. kann der Einsatz aus einem Material bestehen, das aus einer Gruppe ausgewählt ist, die Polyester und Harnstoff-Formaldehydharze aufweist, wohingegen der zylindrische Hals und die Außenschulter aus Polyäthylen bestehen können. Ein geeignetes Polyestermaterial zum Her-

stellen des zylindrischen Halses und der Außenschulter stellt das "Valox"-Polymer der Firma General Electric dar. Zusätzlich zu seinem Hals und seiner Schulter weist der Einsatz vorzugsweise einen Bodenflansch auf, der sich von der Einsatzschulter nach außen erstreckt. Der Bodenflansch hat vorzugsweise einen Außenkante, die an der Innenfläche der Laminattube anliegt. Nach dem Einfüllen des Erzeugnisses in das Innere des Vorformlings und dem Abdichten bzw. Verschließen des Bodens trägt der Bodenflansch dazu bei,

(a) zu verhindern, daß das Erzeugnis zwischen den Einsatz und die Behälteraußenschulter eindringt und

(b) die Durchlässigkeit von Sauerstoff und Wasserdampf durch denjenigen Teil der Außenschulter zu verringern, der am Bodenflansch anliegt.

Der zusammendrückbare Behältervorformling gemäß der Erfindung kann mit Hilfe eines Verfahrens hergestellt werden, das folgende Verfahrensschritte aufweist:

(a) man bringt die Außenfläche des Einsatzhalses in Anlage mit der Innenfläche des zylindrischen Halses,

(b) man ordnet den oberen Teil der Innenfläche der Laminattube gegenüber einem Teil der Außenfläche der Außenschulter an und

(c) man erhitzt und preßt diejenigen Teile der Laminattube und der Außenschulter zusammen, die im Schritt (b) zusammengestellt wurden, um diese Teile miteinander zu verbinden.

Vorzugsweise wird Schritt (a) vor den obigen Schritten (b) und (c) durchgeführt.

Der Einsatzhals und der zylindrische Hals des Behältervor-

formlings sollten derart dimensioniert sein, daß zwischen diesen Bauteilen eine relativ große Reibungskraft vorherrscht. Dies gestattet den Transport des Behältervorformlings von einer ersten Stelle, an der der Vorformling hergestellt wird, zu einer zweiten Stelle, an der das Erzeugnis in den Behältervorformling eingeführt wird, und zwar ohne daß dabei während des Transports die Bauteile sich voneinander trennen oder sich gegeneinander bewegen können.

Das Erzeugnis kann durch den offenen Behälterboden in das Behälterinnere eingeführt werden. Der Boden kann dann durch irgendeine geeignete Technik abgeschlossen werden.

Die Erfindung wird im folgenden anhand der Zeichnung näher erläutert. Es zeigen:

Fig. 1    einen erfindungsgemäßen Behältervorformling in Seitenansicht, wobei ein Teil der Laminattubenwand im Schnitt dargestellt ist, und

Fig. 2    im Schnitt entlang der Linie 2-2 in Fig. 1;

Fig. 3    einen zylindrischen Hals und eine Außenschulter des erfindungsgemäßen Behältervorformlings, die einstückig ausgebildet sind, in perspektivischer Ansicht, wobei zur Darstellung des Behältervorformlingeinsatzes ein Teil des einstückig geformten Aufbaus weggeschnitten ist;

Fig. 4    eine geschnittene Teilansicht zur Verdeutlichung einer Stufe eines Verfahrens zur Herstellung des in den Fig. 1 und 2 gezeigten Behältervorformlings und

Fig. 5    eine geschnittene Teilansicht zur Verdeut-

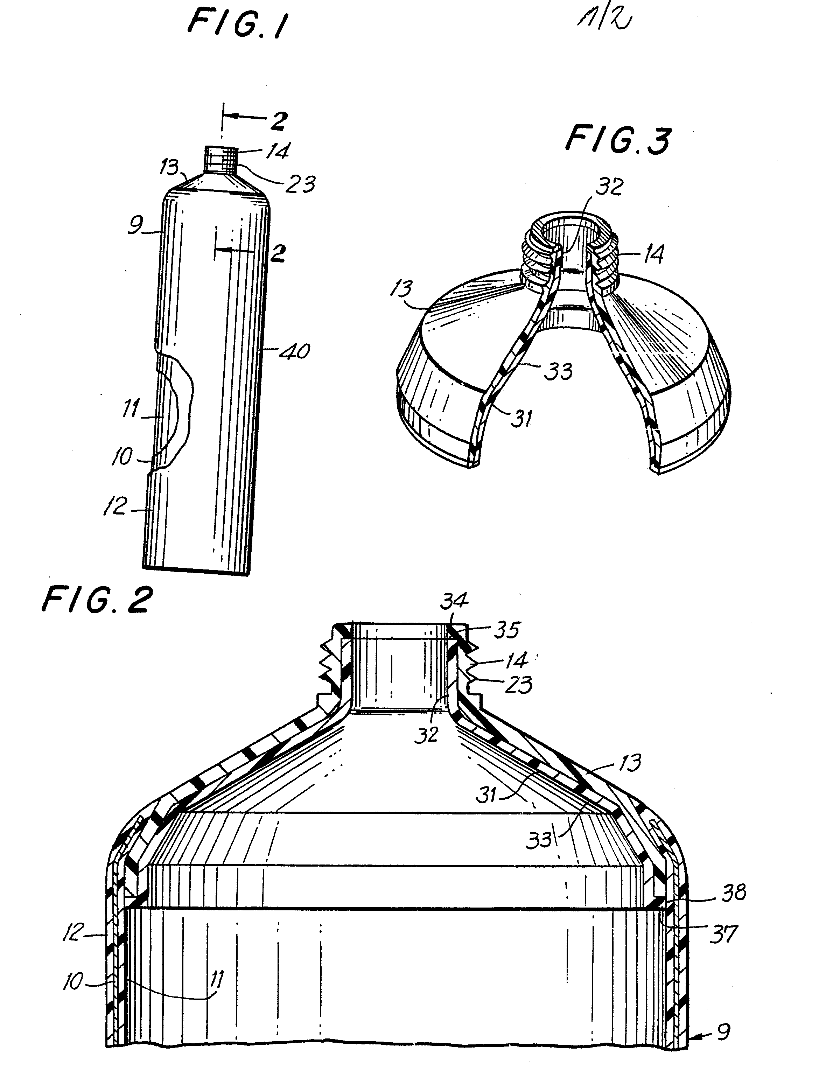

lichung einer anderen Stufe eines Verfahrens
zur Herstellung des in den Fig. 1 und 2 dargestellten Behältervorformlings.

Fig. 1 zeigt ein Ausführungsbeispiel des erfindungsgemäßen
Behältervorformlings 40. Dieser Behältervorformling 40 weist
eine Tube 9 auf, die - wie aus Fig. 1 ersichtlich - eine
Außenschicht 12, eine Innenschicht 11 und eine zwischen die
Innen- und Außenschicht eingelegte Mittelschicht 10 umfaßt.
Die Mittelschicht 10 besteht vorzugsweise aus einem Material,
das nur eine geringe oder gar keine Durchlässigkeit gegenüber Sauerstoff, Wasserdampf und Ölen aufweist. Z.B. kann
die Mittelschicht 10 aus einer Metallfolie, einem Polyester
oder einem Polyvinyliden aufgebaut sein. Vorzugsweise besteht die Mittelschicht aus einer Aluminiumfolie. Die Innen-
und Außenschicht 11 und 12 werden vorzugsweise aus heißsiegelfähigen, thermoplastischen Materialien, wie z. B.
Polyäthylen hergestellt. In dem am meisten bevorzugten
Ausführungsbeispiel der Erfindung geht jede der heißsiegelfähigen, thermoplastischen Schichten mit Hilfe einer Äthylen-
Acrylsäureschicht (nicht dargestellt) eine Klebeverbindung
mit der Aluminiummittelschicht ein.

Die Tube 9 kann aus einem ebenen Laminat durch bekannte
Techniken hergestellt werden. Vergleiche z.B. die Technik
zur Herstellung von Tuben aus ebenen Laminaten, die in
der US-PS 4 123 312 beschrieben ist. Die Tube 9 ist an
ihrem Boden offen.

Außer der Tube 9 weist der in Fig. 1 gezeigte Behälter auch
eine Außenschulter 13 und einen zylindrischen Hals 14 auf.
Der zylindrische Hals 14 hat vorzugsweise ein Schraubgewinde 23 zur Aufnahme einer Aufschraubkappe (nicht dargestellt). Der Aufbau der Außenschulter 13 und des zylindrischen Halses 14 und die Art, wie die Behälterbauteile miteinander verbunden werden, sind in den Fig. 2 bis 5 detaillierter dargestellt.

Wie aus Fig. 2 ersichtlich, stellen der zylindrische Hals 14 und die Außenschulter 13 einen integrierten Aufbau dar. Dieser integrierte Aufbau kann aus geeigneten thermoplastischen Materialien, vorzugsweise Polyäthylen, geformt sein.

Wie in Fig. 2 dargestellt, ist ein Teil der Tube 9 nach innen gebogen. Ein Teil der Außenfläche der Außenschulter steht mit der Innenfläche des oberen Teils der Tube 9, der den nach innen gebogenen Teil einschließt, in Verbindung.

Vorzugsweise werden die Außenschulter 13 und die Tube 9 mit Hilfe eines Heißsiegelverfahrens miteinander verbunden. Wie in Fig. 2 gezeigt, können während des Heißsiegelvorgangs Teile der thermoplastischen Schichten der Tube um die obere Kante der Tubenmittelschicht 10 herumfließen, um einen weichen Übergang zwischen der Außenschulter 13 und der Tube 9 vorzusehen.

Wie aus Fig. 2 ersichtlich, ist die Außenschulter 13 in drei verschiedenen Winkeln geneigt. Der Außenteil der Außenschulter ist senkrecht angeordnet. Bewegt man sich von dem senkrechten Teil der Außenschulter radial nach innen, so ist zuerst ein Teil vorgesehen, der bezüglich der Senkrechten um einen ersten Winkel geneigt ist, und dann ein Teil, der von der Senkrechten um einen zweiten Winkel geneigt ist, der größer als der erste ist. Während des Heißsiegelschrittes wird die Tube 9 lediglich mit dem senkrechten Teil der Außenschulter 13 sowie dem von der Senkrechten um einen ersten, relativ kleinen Winkel ge-

neigten Teil der Außenschulter 13 verbunden. Ein Vorteil dieser bevorzugten Anordnung besteht darin, daß das Ausmaß, in welchem die Tube 9 nach innen gebogen werden muß, um eine zufriedenstellende Heißsiegelverbindung zwischen der Tube und der Außenschulter zu erzielen, minimiert werden kann.

Wie vorstehend erwähnt, sind die Außenschulter 13 und der zylindrische Hals 14 vorzugsweise aus einem Material geformt, das relativ durchlässig gegenüber Wasserdampf und Sauerstoff ist. Um die Menge an Wasserdampf und Sauerstoff zu verringern, die durch die Außenschulter und den zylindrischen Hals fließen würde, falls der Behältervorformling zu einem Behälter verarbeitet würde, weist dieser Behältervorformling einen Einsatz 31 auf. Dieser Einsatz besteht vorzugsweise aus einem Material, das undurchlässiger gegenüber Wasserdampf und Sauerstoff ist, als dasjenige Material, aus dem die Außenschulter und der zylindrische Hals, die einstückig ausgebildet sind, aufgebaut sind.

Der Einsatz 31 umfaßt einen Einsatzhals 32 und eine Einsatzschulter 33. Der Einsatzhals 32 und der zylindrische Hals 14 des Behältervorformlings der Erfindung sind derart ausgestaltet und aufgebaut, daß - falls die Außenfläche des Einsatzhalses 32 in Anlage mit der Innenfläche des zylindrischen Halses 14 gebracht wird, wie dies in Fig. 2 dargestellt ist - der Einsatz 31 unter Reibung an dem zylindrischen Hals 14 festlegbar ist.

Wie in dem in den Fig. 2 und 3 gezeigten, bevorzugten Ausführungsbeispiel dargestellt ist, liegen zumindest wesentliche Teile der Außenfläche des Einsatzhalses und der Außenfläche der Einsatzschulter an zumindest wesentlichen Teilen der Innenfläche des zylindrischen Halses bzw. der Innenfläche der Außenschulter des Behältervorformlings an. Unter dem Ausdruck "zumindest wesentliche Teile" einer Fläche sind wenigstens etwa 80% dieser Fläche zu verstehen.

Wie aus Fig. 2 ersichtlich, weist der Einsatz 31 auch einen Bodenflansch 37 auf, der sich von der Einsatzschulter 33 nach außen erstreckt. Die Außenkante 38 des Bodenflansches liegt an der Innenfläche der Tube 9 an.

Der zylindrische Hals 14 des in der Fig. 2 gezeigten Ausführungsbeispieles hat an seinem oberen Ende eine sich nach innen erstreckende Lippe 34. Die obere Kante 35 des Einsatzhalses 32 liegt an der Bodenfläche der sich nach innen erstreckenden Lippe 34 an. Eine derartige Anordnung ermöglicht eine ästhetisch ansprechende, ununterbrochene Fläche, falls eine Person in die zylindrische Öffnung des zylindrischen Halses 14 hinabschaut.

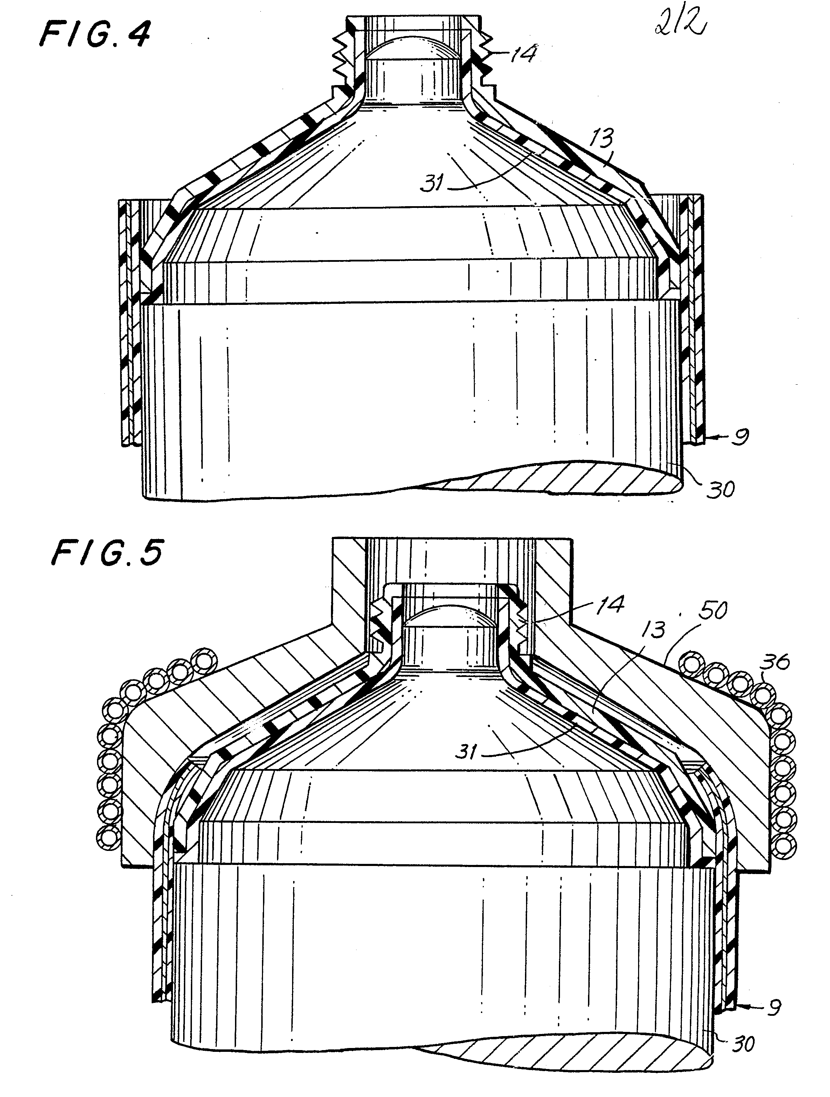

Die Bauteile des Behältervorformlings 40 können durch mehrere, verschiedene Verfahren zusammengesetzt und miteinander heißversiegelt werden. Mit Bezug auf Fig. 4 ist eine Stufe eines bevorzugten Verfahrens gezeigt, bei der diese Bauteile zusammengesetzt werden.

Wie aus Fig. 4 ersichtlich, werden der Hals 14 und die Außenschulter 13, die einstückig ausgebildet sind, und der Einsatz 31 auf einem Abstützdorn 30 angeordnet. Die Tube 9 ist derart um den Abstützdorn 30 angeordnet, daß ein erster Tubenteil an dem senkrechten Teil der Außenschulter 13 anliegt und ein zweiter Tubenteil sich über den senkrechten Teil der Außenschulter 13 hinauserstreckt. Die Behälterbauteile können in dieser Weise von Hand oder durch eine automatische Maschine oder durch eine Kombination dieser beiden Arten ausgerichtet werden. Mit Ausnahme des Einsatzes 31, der vor oder gleichzeitig mit dem Hals und der Außen-

schulter, die beide einstückig ausgebildet sind, auf den Dorn 30 angeordnet werden muß, können die Bauteile des Behälters in beliebiger Reihenfolge auf dem Dorn angeordnet werden.

Bei einem bevorzugten Verfahren werden die Bauteile des Behältervorformlings automatisch in einer Reihe von Stationen ausgerichtet. Bei der ersten Station wird der Einsatz 31 auf einem Support angeordnet. In der zweiten Station werden der zylindrische Hals und die Außenschulter, die einstückig ausgebildet sind, auf dem auf dem Support befindlichen Einsatz angeordnet, um eine Untergruppe zu erhalten, die den Einsatz und den einstückigen Aufbau aufweist. In der dritten Station wird die Untergruppe auf dem Abstützdorn 30 angeordnet. In der vierten Station wird die Laminattube 9 auf dem Abstützdorn angeordnet.

Sind die Bauteile des Behältervorformlings 40, wie in Fig.4 dargestellt, angeordnet, so sind die Verbindungsflächen dieser Bauteile bereit, zu deren gegenseitiger Verbindung erhitzt und zusammengepreßt zu werden. Dies kann in irgendeiner Weise durchgeführt werden, jedoch werden in dem am meisten bevorzugten Verfahren die Bauteile durch das nachstehend beschriebene Verfahren erhitzt und zusammengepreßt.

In Fig. 5 ist u.a. ein Preßwerkzeug 50 dargestellt, das zum Zusammenpressen der Bauteile des Behältervorformlings 40 dient. Eine Induktionsspule 36 ist um das Preßwerkzeug 50 herumgewickelt.

In Fig. 5 ist das Preßwerkzeug 50 in einer Stellung während des Abwärtshubs, nachdem es den obersten Teil der Tube 9 nach innen gebogen hat, dargestellt, und zwar gerade vor dem Zusammenpressen der Teile. Zu oder etwa zu diesem Zeit-

0130239

punkt, an dem das Preßwerkzeug 50 beginnt, die Bauteile zusammenzudrücken, wird in der Spule 36 ein Stromfluß eingeleitet, um ein Hochfrequenzmagnetfeld zu erzeugen. Das Magnetfeld wird bei einer Frequenz und für eine Zeitperiode aufrechterhalten, um die Aluminiumschicht 10 in der Tube zu erhitzen und die thermoplastischen Schichten 11 und 12 und
die Außenfläche des unteren Teils der Außenschulter zu erweichen.

Nachdem die thermoplastischen Schichten und die Außenfläche
des unteren Teils der Außenschulter in einem Ausmaß erweicht sind, was eine Schmelzverbindung zwischen diesen
Teilen ermöglicht, wird der durch die Spule 36 fließende
Strom unterbrochen, um den Behältervorformling abkühlen zu
lassen. Während dieses Abkühlvorganges preßt das Preßwerkzeugt 50 weiterhin die Bauteile des Behältervorformlings
zusammen, und diese Bauteile gehen untereinander eine Schmelzverbindung ein. Nachdem die Schmelzverbindung ausgeführt ist,
wird das Preßwerkzeug 50 nach oben bewegt und der Behältervorformling mit offenem Boden von dem Dorn 30 entfernt.

Nachdem der Behältervorformling vom Dorn abgezogen ist,
kann ein Erzeugnis durch den offenen Boden des Vorformlings
in dessen Innenraum eingeführt werden. Der Boden wird dann
z.B. durch Heißsiegeln abgeschlossen.

Zusammendrückbarer Behältervorformling und Verfahren zu dessen Herstellung

Patentansprüche:

1. Zusammendrückbarer Behältervorformling gekennzeichnet durch

(a) einen zylindrischen Hals (14) mit einer Innenfläche und einer Außenfläche,

(b) eine flexible Laminattube (9) mit einer Innenfläche und einer Außenfläche sowie einem offenen Boden,

(c) eine Außenschulter (13), die den zylindrischen Hals (14) mit der Laminattube (9) verbindet und eine Innenfläche sowie einen Außenfläche aufweist, wobei ein Teil der Außenfläche der Schulter (13) mit einem oberen Teil der Innenfläche der Laminattube (9) in Verbindung steht, und

(d) einen Einsatz (31), der unter Reibung an dem zylindrischen Hals (14) befestigt ist und folgende Teile aufweist:

(i) einen Einsatzhals (32) mit einer Innenfläche und einer Außenfläche, wobei wenigstens ein Teil der Außenfläche des Einsatzhalses (32) an wenigstens einem Teil der Innenfläche des zylindrischen

Halses (14) anliegt und unter Reibung befestigt ist, und

(ii) eine Einsatzschulter (33) mit einer Innenfläche und einer Außenfläche, wobei wenigstens ein Teil der Außenfläche der Einsatzschulter (33) an wenigstens einem Teil der Innenfläche der Außenschulter (13) anliegt.

2.    Behältervorformling nach Anspruch 1,
dadurch   g e k e n n z e i c h n e t ,
daß der zylindrische Hals (14) und die Außenschulter (13) aus Polyäthylen und der Einsatz (32) aus einem Material, das aus der Gruppe bestehend aus Polyestern und Harnstoff-Formaldehydharzen ausgewählt ist, hergestellt sind.

3.    Behältervorformling nach Anspruch 1,
dadurch   g e k e n n z e i c h n e t ,
daß der zylindrische Hals (14) und die Außenschulter (13) einen einstückig geformten Aufbau bilden.

4.    Behältervorformling nach Anspruch 1,
dadurch   g e k e n n z e i c h n e t ,
daß wenigstens wesentliche Teile der Außenfläche des Einsatz-halses (32) und der Außenfläche der Einsatzschulter (33) an wenigstens wesentlichen Teilen der Innenfläche des zylindrischen Halses (14) bzw. der Innenfläche der Außenschulter (13) anliegen.

5.    Behältervorformling nach Anspruch 1,
dadurch   g e k e n n z e i c h n e t ,
daß der Einsatz (31) einen Bodenflansch (37) aufweist, der sich von der Einsatzschulter (33) nach außen erstreckt und eine an der Innenfläche der Laminattube (9) anliegende Außenkante (38) aufweist.

6.    Behältervorformling nach Anspruch 1,
dadurch   g e k e n n z e i c h n e t ,
daß ein erster Teil der Außenschulter (13), der am weitesten
vom zylindrischen Hals (14) entfernt ist, senkrecht verläuft,
daß ein zweiter Teil der Außenschulter (13), der dem ersten
Teil benachbart ist, um einen ersten Winkel bezüglich der
Senkrechten geneigt ist, und daß ein dritter Teil der Außenschulter (13), der dem zweiten Teil benachbart ist, um
einen zweiten Winkel bezüglich der Senkrechten geneigt ist,
der größer als der erste Winkel ist.

7.    Behältervorformling nach Anspruch 1,
dadurch   g e k e n n z e i c h n e t ,
daß der zylindrische Hals (14) eine sich nach innen erstreckende Lippe (34) mit einer Bodenfläche und der Einsatzhals (32) eine obere Kante (35) aufweist, wobei die Bodenfläche der sich nach innen erstreckenden Lippe (34) an
der oberen Kante (35) des Einsatzhalses (32) anliegt.

8.    Behältervorformling nach Anspruch 1,
dadurch   g e k e n n z e i c h n e t ,
daß der zylindrische Hals (14) und die Außenschulter (13)
aus einem Material hergestellt sind, das sich von dem
Material, aus dem der Einsatz (31) aufgebaut ist, unterscheidet, wobei das Material, aus dem der Einsatz (31) gefertigt ist, undurchlässiger gegenüber Wasserdampf und
Sauerstoff ist, als dasjenige Material, aus dem der zylindrische Hals (14) und die Außenschulter (13) hergestellt
sind.

9.    Behältervorformling nach Anspruch 8,
dadurch   g e k e n n z e i c h n e t ,
daß der zylindrische Hals (14) und die Außenschulter (13)
aus Polyäthylen hergestellt sind und der Einsatz (31) aus einem Material gefertigt ist, das aus der Gruppe bestehend
aus Polyestern und Harnstoff-Formaldehydharzen ausgewählt ist.

10. Behältervorformling nach Anspruch 8,
dadurch  g e k e n n z e i c h n e t ,
daß der zylindrische Hals (14) und die Außenschulter (13)
einen einstückig geformten Aufbau aufweisen.

11. Behältervorformling nach Anspruch 8,
dadurch  g e k e n n z e i c h n e t ,
daß zumindest wesentliche Teile der Außenfläche des Einsatzhalses (32) und der Außenfläche der Einsatzschulter (33)
an wesentlichen Teilen der Innenfläche des zylindrischen
Halses (14) bzw. der Innenfläche der Außenschulter (13) anliegen.

12. Behältervorformling nach Anspruch 8,
dadurch  g e k e n n z e i c h n e t ,
daß der Einsatz (31) einen sich von der Einsatzschulter (33)
nach außen erstreckenden Bodenflansch (37) aufweist, wobei
der Bodenflansch mit einer Außenkante (38) versehen ist,
die an der Innenfläche der Laminattube (9) anliegt.

13. Behältervorformling nach Anspruch 8,
dadurch  g e k e n n z e i c h n e t ,
daß ein erster Teil der Außenschulter (13), der am weitesten
vom zylindrischen Hals (14) entfernt ist, senkrecht verläuft, daß ein zweiter Teil der Außenschulter (13), der dem
ersten Teil benachbart ist, um einen ersten Winkel bezüglich
der Senkrechten geneigt ist, und daß ein dritter Teil der
Außenschulter (13), der dem zweiten Teil benachbart ist,
um einen zweiten Winkel bezüglich der Senkrechten geneigt
ist, der größer als der erste Winkel ist.

0130239

14. Behältervorformling nach Anspruch 8,
dadurch  g e k e n n z e i c h n e t ,
daß der zylindrische Hals (14) eine sich nach innen erstreckende Lippe (34) mit einer Bodenfläche und der Einsatzhals (32) eine obere Kante (35) aufweist, wobei die
Bodenfläche der sich nach innen erstreckenden Lippe (34)
an der oberen Kante (35) des Einsatzhalses (32) anliegt.

15. Behältervorformling nach Anspruch 12,
dadurch  g e k e n n z e i c h n e t ,
daß der zylindrische Hals (14) eine sich nach innen erstreckende Lippe (34) mit einer Bodenfläche und der Einsatzhals (32) eine obere Kante (35) aufweist, wobei die
Bodenfläche der sich nach innen erstreckenden Lippe (34)
an der oberen Kante (35) des Einsatzhalses (32) anliegt.

16. Behältervorformling nach Anspruch 15,
dadurch  g e k e n n z e i c h n e t ,
daß ein erster Teil der Außenschulter (13), der am weitesten vom zylindrischen Hals (14) entfernt ist, senkrecht
verläuft, daß ein zweiter Teil der Außenschulter (13),
der dem ersten Teil benachbart ist, um einen ersten Winkel
bezüglich der Senkrechten geneigt ist, und daß ein dritter
Teil der Außenschulter (13), der dem zweiten Teil benachbart ist, um einen zweiten Winkel bezüglich der Senkrechten
geneigt ist, der größer als der erste Winkel ist.

17. Verfahren zur Herstellung des Behältervorformlings
des Anspruches 1,
dadurch  g e k e n n z e i c h n e t ,
daß man
(a) die Außenfläche des Einsatzhalses (32) in Anlage mit
    der Innenfläche des zylindrischen Halses (14) bringt,
(b) einen oberen Teil der Innenfläche der Laminattube (9)

gegenüber einem Teil der Außenfläche der Außenschulter (13) anordnet und

(c) die Teile der Laminattube (9) und der Außenschulter (13), die im Schritt (b) zueinander angeordnet wurden, zur Verbindung dieser Teile erhitzt und zusammenpreßt.

18. Verfahren nach Anspruch 17,

dadurch   g e k e n n z e i c h n e t ,

daß man den Schritt (a) vor den Schritten (b) und (c) durchführt.

19. Verfahren zur Herstellung des Behältervorformlings des Anspruches 8,

dadurch   g e k e n n z e i c h n e t ,

daß man

(a) die Außenfläche des Einsatzhalses (32) in Anlage mit der Innenfläche des zylindrischen Halses (14) bringt,

(b) einen oberen Teil der Innenfläche der Laminattube (9) gegenüber einem Teil der Außenfläche der Außenschulter (13) anordnet und

(c) die Teile der Laminattube (9) und der Außenschulter (13), die im Schritt (b) zueinander angeordnet wurden, zur Verbindung dieser Teile erhitzt und zusammenpreßt.

20. Verfahren nach Anspruch 19,

dadurch   g e k e n n z e i c h n e t ,

daß man den Schritt (a) vor den Schritten (b) und (c) ausführt.

FIG.1

0130239
1/2

FIG.3

FIG.2

FIG.4

FIG.5

## EINSCHLÄGIGE DOKUMENTE

EP 83113127.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | AT - B - 324 207 (COLGATE-PALM-OLIVE COMPANY)<br><br>* Gesamt, insbesonders Fig. 2,8; Seite 4, Zeilen 26-32 * | 1-5,8-12,17-20 | B 65 D 35/10<br><br>B 29 D 23/20 |
| D,A | US - A - 4 185 757 (SCHULTZ)<br><br>* Gesamt, insbesonders Fig. 1, 2 * | 1,3-5, 7,10-12,14 | |
| A | DE - A - 1 761 596 (AMERICAN CAN CO)<br><br>* Gesamt, insbesonders Ansprüche 1,6-9 * | 1-4,7-11,14 | |
| A | DE - A1 - 2 628 014 (MÄGERLE)<br>* Fig. 4 * | 6,13, 16 | **RECHERCHIERTE SACHGEBIETE (Int. Cl. ³)** |
| D,A | DE - A1 - 3 042 073 (AISA AUTO-MATION INDUSTRIELLA S.A.)<br>* Fig. 1 * | 6,13, 16 | B 65 D 35/00<br><br>B 29 D 23/00 |

Der vorliegende Recherchenbericht wurde für alle Patentansprüche erstellt.

| Recherchenort | Abschlußdatum der Recherche | Prüfer |
|---|---|---|
| WIEN | 27-08-1984 | CZUBA |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82